# EUROPEAN PATENT APPLICATION

(11) **EP 3 996 373 A2**
(43) Date of publication of application: **11.05.2022**
(21) Application number: 21218026.9
(22) Date of filing: 28.12.2021
(51) Int. Cl.: H04N 21/00

(54) **METHOD AND APPARATUS OF GENERATING BULLET COMMENT, DEVICE, AND STORAGE MEDIUM**

(30) Priority: 25.03.2021 CN 202110323018
(71) Applicant: Beijing Baidu Netcom Science and Technology Co., Ltd., Beijing 100085 (CN)
(72) Inventor: WEI, Zongqun, Beijing, 100085 (CN)
(74) Representative: Zimmermann, Tankred Klaus

(57) **Abstract**

A method and an apparatus of generating a bullet comment, a device, and a storage medium are provided, which may be applied to a field of a computer technology, in particular to a field of intelligent recommendation. The method includes: acquiring a content information of video data and an attribute information of a target object; extracting a first key information of the content information and extracting a second key information of the attribute information; determining a target key information for the target object, including determining an information, which is matched with the second key information, in the first key information as the target key information; retrieving a first multimedia information matched with the target key information from a predetermined media library; generating a first bullet comment for the target key information based on the first multimedia information, so as to display the first bullet comment while playing the video data. The first bullet comment includes a link to a recommendation information for the target object, and the recommendation information includes the first multimedia information.

## Description

### TECHNICAL FIELD

The present disclosure relates to a field of a computer technology, in particular to a field of intelligent recommendation, and more specifically to a method and an apparatus of generating a bullet comment, a device, and a storage medium.

### BACKGROUND

With a development of a network technology, a bullet comment in a video has become one of main ways to enhance an interactivity between objects. Specifically, after an object posts a comment content, the comment content may be displayed in the form of a sliding subtitle on a display page.

In a related field, the bullet comment may provide a simple interaction and meet a basic need of the object.

### SUMMARY

There is provided a method and an apparatus of generating a bullet comment, a device, and a storage medium, which may expand a bullet comment function.

According to an aspect of the present disclosure, there is provided a method of generating a bullet comment, including: acquiring a content information of video data and an attribute information of a target object; extracting a first key information of the content information, and extracting a second key information of the attribute information; determining a target key information for the target object, wherein the determining including determining an information, which is matched with the second key information, in the first key information as the target key information; retrieving a first multimedia information matched with the target key information from a predetermined media library; and generating a first bullet comment for the target key information based on the first multimedia information, so as to display the first bullet comment while playing the video data, wherein the first bullet comment includes a link to a recommendation information for the target object, and the recommendation information includes the first multimedia information.

According to another aspect of the present disclosure, there is provided an apparatus of generating a bullet comment, including: an information acquisition module configured to acquire a content information of video data and an attribute information of a target object; an information extraction module configured to extract a first key information of the content information and extract a second key information of the attribute information; a key information determination module configured to determine a target key information for the target object, including determining an information, which is matched with the second key information, in the first key information as the target key information; a first information retrieval module configured to retrieve a first multimedia information matched with the target key information from a predetermined media library; and a bullet comment generation module configured to generate a first bullet comment for the target key information based on the first multimedia information, so as to display the first bullet comment while playing the video data, wherein the first bullet comment includes a link to a recommendation information for the target object, and the recommendation information includes the first multimedia information.

According to another aspect of the present disclosure, there is provided an electronic device, including: at least one processor; and a memory communicatively connected to the at least one processor, wherein the memory stores instructions executable by the at least one processor, and the instructions, when executed by the at least one processor, cause the at least one processor to implement the method of generating the bullet comment provided by the present disclosure.

According to another aspect of the present disclosure, there is provided a non-transitory computer-readable storage medium having computer instructions stored thereon, wherein the computer instructions allow a computer to implement the method of generating the bullet comment provided by the present disclosure.

According to another aspect of the present disclosure, there is provided a computer program product containing a computer program, wherein the computer program, when executed by a processor, causes the processor to implement the method of generating the bullet comment provided by the present disclosure.

It should be understood that content described in this section is not intended to identify key or important features in the embodiments of the present disclosure, nor is it intended to limit the scope of the present disclosure. Other features of the present disclosure will be easily understood through the following description.

### BRIEF DESCRIPTION OF THE DRAWINGS

The drawings are used to understand the solution better and do not constitute a limitation to the present disclosure.
FIG. 1 shows a schematic diagram of an application scenario for a method and an apparatus of generating a bullet comment according to some embodiments of the present disclosure.
FIG. 2 shows a flowchart of a method of generating a bullet comment according to some embodiments of the present disclosure.
FIG. 3 shows a schematic principle diagram of determining a target key information according to some embodiments of the present disclosure.
FIG. 4 shows a schematic principle diagram of a method of generating a bullet comment according to some embodiments of the present disclosure.
FIG. 5 shows a schematic principle diagram of a method of generating a bullet comment according to another embodiment of the present disclosure.
FIG. 6 shows a schematic diagram of a recommendation information responding to an interactive operation according to some embodiments of the present disclosure.
FIG. 7 shows a schematic structural diagram of a predetermined knowledge graph constructed according to some embodiments of the present disclosure.
FIG. 8 shows a structural block diagram of an apparatus of generating a bullet comment according to some embodiments of the present disclosure.
FIG. 9 shows a block diagram of an electronic device for implementing the method of generating the bullet comment of the embodiments of the present disclosure.

### DETAILED DESCRIPTION OF EMBODIMENTS

Exemplary embodiments of the present disclosure are described below with reference to the drawings, which include various details of the embodiments of the present disclosure to facilitate understanding, and should be considered as merely exemplary. Therefore, those of ordinary skilled in the art should realize that various changes and modifications may be made to the embodiments described herein without departing from the scope and spirit of the present disclosure. Likewise, for clarity and conciseness, descriptions of well-known functions and structures are omitted in the following description.

The present disclosure provides a method of generating a bullet comment, including an information acquisition stage, an information extraction stage, a key information determination stage, an information retrieval stage, and a bullet comment generation stage. In the information acquisition stage, a content information of video data and an attribute information of a target object are acquired. In the information extraction stage, a first key information of the content information is extracted, and a second key information of the attribute information is extracted. In the key information determination stage, a target key information for the target object is determined, including determining an information, which is matched with the second key information, in the first key information, as the target key information. In the information retrieval stage, a first multimedia information matched with the target key information is retrieved from a predetermined media library. In the bullet comment generation stage, a first bullet comment for the target key information is generated based on the first multimedia information, so that the first bullet comment is displayed while the video data is played. The first bullet comment includes a link to a recommendation information for the target object, and the recommendation information includes the first multimedia information.

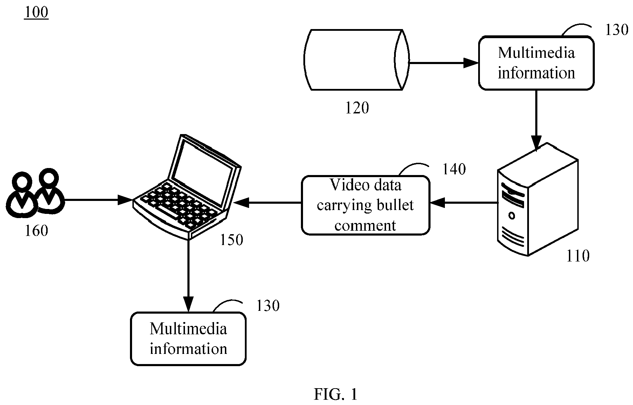

An application scenario for a method and an apparatus provided in the present disclosure will be described below with reference to FIG. 1.

FIG. 1 shows a schematic diagram of an application scenario for a method and an apparatus of generating a bullet comment according to some embodiments of the present disclosure.

As shown in FIG. 1, an application scenario 100 may include a server 110, a database 120, and a terminal device 150. The server 110 may access the database 120 through a network, the terminal device 150 may communicate with the server 110 through a network, and the network may include a wired or wireless communication link.

According to the embodiments of the present disclosure, for example, a multimedia information may be stored in the database 120. The database 120 may store a full information of a plurality of platforms such as a video platform, a text platform and a forum platform, or a full information of a single platform. The server 110 may, for example, read a multimedia information from the database 120, and transmit the multimedia information to the terminal device 150 as a recommendation information.

A user 160 may, for example, interact with the server 110 over a network using the terminal device 150, so as to receive or transmit a message or the like. The terminal device 150 may be a terminal device with a display screen on which a video may be played, including but not limited to a smart phone, a tablet computer, a laptop portable computer, a desktop computer, and so on.

The server 110 may, for example, transmit video data for display to the terminal device 150 in response to the interaction of the user 160. The server may be a server that provides various services, such as a background management server that supports a website or a client application browsed by the user using the terminal device 150. The server may be a cloud server, a server of a distributed system, or a server combined with a blockchain.

In an embodiment, prior to transmitting the video data to the terminal device 150, the server 110 may, for example, based on a content of the video data, read a multimedia information 130 associated with the content of the video data from the database 120 as an information recommended to the user. The multimedia information may be added to the video data in the form of a bullet comment. Thus, the video data transmitted by the server 110 to the terminal device 150 is video data 140 carrying the bullet comment. Accordingly, after receiving the video data carrying the bullet comment, the terminal device 150 may display the bullet comment while playing the video data, so that the multimedia information may be recommended to the user. It may be understood that the server 110 may further, for example, in response to a bullet comment acquisition request transmitted by the terminal device 150, read a multimedia information according to a video frame to be played on the terminal device 150 and generate a bullet comment, so as to transmit the bullet comment to the terminal device 150. The terminal device may transmit the bullet comment acquisition request in real time according to the video frame to be played while the video data is played. Alternatively, the server 110 may store the video data separately from the bullet comment, and use an identification of the video data as a storage index of the bullet comment for the video data.

In an embodiment, the bullet comment may include a link for the multimedia information, so that a display screen of the terminal device 150 may jump to a display screen of the multimedia information 130 through a user's click operation on the bullet comment when the user 160 watches the video data played on the terminal device 150.

It should be noted that the method of generating the bullet comment provided by the present disclosure may be performed by the server 110. Accordingly, the apparatus of generating the bullet comment provided by the present disclosure may be provided in the server 110. The method of generating the bullet comment provided by the present disclosure may also be performed by a server or a server cluster that is different from the server 110 and that may communicate with the server 110. Accordingly, the apparatus of generating the bullet comment provided by the present disclosure may also be provided in a server or a server cluster that is different from the server 110 and that may communicate with the server 110.

It should be understood that the number and type of the terminal device, the server and the database in FIG. 1 are merely illustrative. According to implementation needs, there may be any number and type of terminal device, server and database.

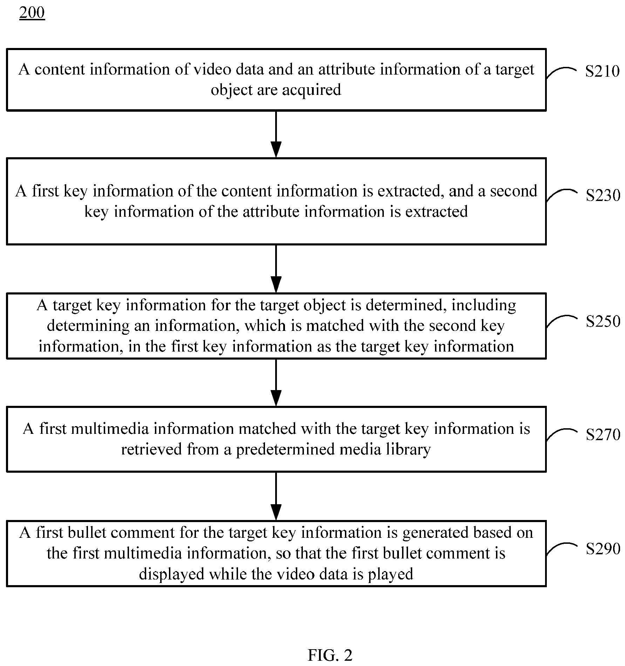

FIG. 2 shows a flowchart of a method of generating a bullet comment according to some embodiments of the present disclosure.

As shown in FIG. 2, a method 200 of generating a bullet comment of this embodiment may include operation S210 to operation S290.

In operation S210, a content information of video data and an attribute information of a target object are acquired.

According to the embodiments of the present disclosure, the content information of the video data may contain an image information of each video frame in the video data, a subtitle in each video frame, a voice information carried in each video frame, and so on.

According to the embodiments of the present disclosure, the attribute information of the target object may contain, for example, a static attribute and a dynamic attribute of the target object. The static attribute may include a basic information of the target object, such as an age of the target object. The dynamic attribute may include an attribute generated by a social behavior of the target object, which may reflect a preference of the target object.

In operation S230, a first key information of the content information is extracted, and a second key information of the attribute information is extracted.

According to the embodiments of the present disclosure, a Video Content Understanding method may be used to extract the first key information from the content information. The Video Content Understanding method may be implemented to parse the video data into structured and machine-readable intention and word slot information through a series of artificial intelligence algorithms.

According to the embodiments of the present disclosure, an image, a subtitle, a voice, etc. in the content information may be parsed, so that an entity feature, an attribute feature, and a relationship feature between the entity feature and the attribute feature may be extracted from the content information. For example, in addition to the image, the subtitle and the voice, the content information may further contain a title, a cover image and a classification information of the video data, so that more information may be integrated for feature extraction. For example, a timeliness of the video data may be determined according to a time of uploading the video data. For example, a content quality of the video data may be determined according to a definition and an integrity of the video data. The extracted features and the determined timeliness, content quality and other information may be used as the first key information.

Exemplarily, after the extracted features are obtained, for example, the entity feature and the attribute feature may be used to form data of a key-value pair structure according to the relationship feature between the entity feature and the attribute feature. The data of the key-value pair structure may be used as the first key information. Exemplarily, the first key information obtained may contain, for example, "item category - fruit".

Exemplarily, in a process of extracting the first key information, any object recognition method such as a face recognition method, an animal recognition method and a plant recognition method may be used to recognize an entity in the video data, and an entity word representing the entity may be used as a portion of the first key information.

According to the embodiments of the present disclosure, after the attribute information of the target object is obtained, the attribute information may be formed into data of the key-value pair structure to serve as the second key information. Alternatively, when the attribute information of the target object contains a dynamic information, it is possible to count a tag of a multimedia information associated with the dynamic information, and determine a tag counted to have a larger number as the second key information of the attribute information. Exemplarily, the second key information obtained may contain "idol-San ZHANG", for example.

It may be understood that the above method of extracting the first key information and extracting the second key information is only illustrated by way of example to facilitate the understanding of the present disclosure. Any feature extraction method in a related art may be adopted in the present disclosure to extract the first key information and the second key information, which is not limited in the present disclosure.

In operation S250, a target key information for the target object is determined, including determining an information, which is matched with the second key information, in the first key information as the target key information.

According to the embodiments of the present disclosure, an information same as the second key information in the first key information may be used as the target key information. For example, if the first key information contains "Singer-San ZHANG" and the second key information contains "San ZHANG", the first key information "Singer-San ZHANG" may be determined as the target key information. Alternatively, an entity word in the first key information that belongs to a category indicated by the second key information may be used as the target key information. For example, if the first key information contains the entity word "corgi" and the second key information contains "dog", the "corgi" in the first key information may be determined as the target key information.

According to the embodiments of the present disclosure, a similarity between each first key information and each key information in the second key information may be determined firstly. The first key information whose similarity with a certain second key information is greater than a first predetermined value may be determined as the target key information. The similarity between key information may be embodied by any parameter form including a cosine similarity, a Pearson correlation coefficient, a Jaccard similarity coefficient, etc. The first predetermined value may be set, for example, as 0.7, according to actual needs, which is not limited in the present disclosure.

In operation S270, a first multimedia information matched with the target key information is retrieved from a predetermined media library.

According to the embodiments of the present disclosure, various types of multimedia information such as a video information, an audio information and a text information may be maintained in the predetermined media library. The multimedia information in the predetermined media library may come from a video platform, a content interaction platform, a news information, a shopping platform, etc. The multimedia information in the predetermined media library may be a single-mode information (e.g., a pure text information, a pure picture information, etc.) or a multi-mode information (e.g., a picture-combined-text information, etc.).

In the embodiment, when the first multimedia information is retrieved, a multimedia information in the predetermined media library that is labeled with the target key information may be used as the first multimedia information. Alternatively, in the embodiment, a similarity between the target key information and a description information of each multimedia information in the predetermined media library may be determined, and a multimedia information with a description information whose similarity with the target key information is greater than a second predetermined value may be used as the first multimedia information. The second predetermined value may be the same as or different from the first predetermined value described above. For example, the second predetermined value may be 0.5. In the present disclosure, the second predetermined value may be selected according to actual needs.

In operation S290, a first bullet comment for the target key information is generated based on the first multimedia information, so that the first bullet comment is displayed while the video data is played.

According to the embodiments of the present disclosure, after the first multimedia information is obtained, the first multimedia information may be used as a recommendation information for the target object, and a bullet comment obtained based on the recommendation information may be used as the first bullet comment for the target key information. A title of the recommendation information, a summary of the recommendation information or a keyword extracted from the recommendation information may be used as a first bullet comment content. The first bullet comment content and a link to the recommendation information (e.g., a display page address) may form the first bullet comment. Therefore, the first bullet comment includes a link to the recommendation information for the target object. If the recommendation information only includes the first multimedia information, the first bullet comment may include the display page address of the first multimedia information. If the recommendation information includes a plurality of information, the display page address included in the first bullet comment may be an address of a recommendation page on which the plurality of information are arranged.

In summary, the embodiments of the present disclosure may be implemented to determine the target key information for the target object based on the content information of the video data and the attribute information of the target object, retrieve the multimedia information based on the target key information, and generate the bullet comment including the link to the multimedia information, so that the information may be recommended to the target object in the form of a bullet comment when the video data is played. In this way, a display form of the recommendation information may be enriched, a function of the bullet comment may be expanded, and a click rate of the information may be improved to a certain extent.

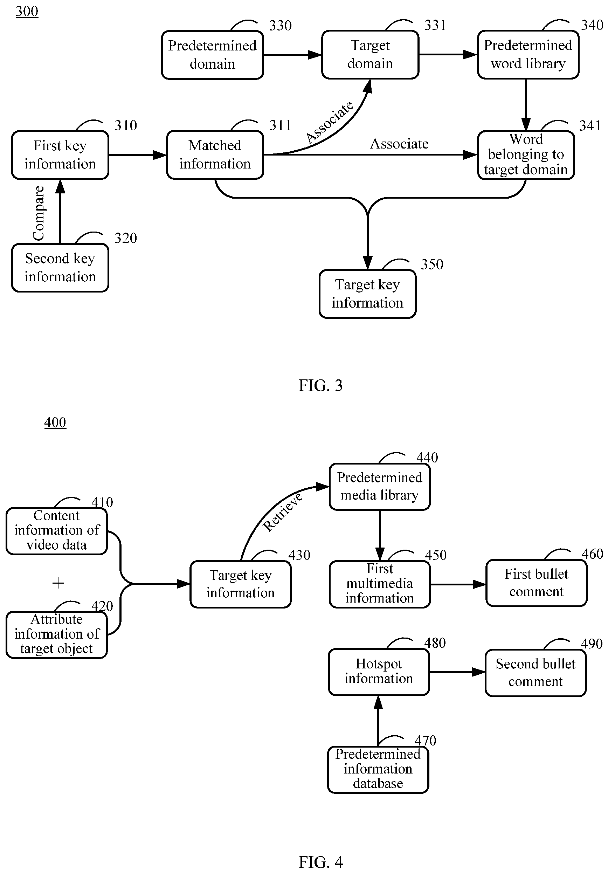

FIG. 3 shows a schematic principle diagram of determining the target key information according to some embodiments of the present disclosure.

As shown in FIG. 3, in this embodiment 300, when determining the target key information, in addition to determining an information 311, which is matched with the second key information, in the first key information 310 by comparing the second key information 320 with the first key information 310, a word associated with the matched information 311 may be acquired from a target domain 331 associated with a domain that the matched information 311 belongs to, and the word and the matched information 311 may together constitute a target key information 350.

Exemplarily, a predetermined word library 340 including words in a plurality of predetermined domains 330 may be maintained in the present disclosure. The embodiment may be implemented to firstly determine a domain that the matched information 311 belongs to, and then determine a domain in the plurality of predetermined domains 330 that is associated with the domain to which the matched information 311 belongs, so as to obtain the target domain 331. After the target domain 331 is determined, a word belonging to the target domain 331 and associated with the matched information (that is, a word 341 belonging to the target domain) may be selected from the predetermined word library 340, and the selected word may be determined as the target key information 350. The domain that the matched information 311 belongs to may be a domain that the word contained in the matched information 311 belongs to, which is one of the plurality of predetermined domains 330.

Exemplarily, the predetermined domain may include a transportation domain, an energy domain, a food domain, an entertainment domain, and the like. If the target key information contains a car that belongs to the transportation domain, the determined target domain may include the energy domain, and the word selected from the predetermined word library may include, for example, a lithium battery, etc.

Exemplarily, when determining the target domain, an entity word may be selected from the matched information 311, and a domain associated with an entity indicated by the entity word may be determined as the target domain. When selecting the word from the predetermined word library, it is possible to only select the entity word.

In the embodiment, when determining the target key information, the target key information may be further selected from the domain associated with the matched information, which may improve a diversity of the multimedia information retrieved based on the determined target key information, so as to improve an effectiveness of recommendation.

FIG. 4 shows a schematic principle diagram of a method of generating a bullet comment according to some embodiments of the present disclosure.

As shown in FIG. 4, in this embodiment 400, the generated bullet comment may include a first bullet comment 460 and a second bullet comment 490. The first bullet comment 460 is generated by a process similar to the process of generating the bullet comment described above. For example, a target key information 430 is determined according to a content information 410 of the video data and an attribute information 420 of the target object, a first multimedia information 450 is retrieved from a predetermined media library 440 based on the target key information 430, and the first bullet comment is generated based on the first multimedia information 450. The second bullet comment may be generated by a process including retrieving a hotspot information 480 from a predetermined information database 470 and generating the second bullet comment 490 for the hotspot information 480 based on the hot spot information 480.

Exemplarity, a title, a summary or a keyword of the hotspot information 480 may be used as a second bullet comment content. The second bullet comment content and a link to the hotspot information 480 (e.g., a display page address) may form the second bullet comment. The hotspot information 480 and the first multimedia information described above may together constitute the recommendation information for the target object.

Exemplarity, the predetermined information database 470 may be an information database of a multimedia information platform such as a news platform and a microblog platform. In the present disclosure, the hotspot information may be acquired by calling an API interface provided by the multimedia information platform. The hotspot information is an information having a high requirement on timeliness.

In summary, the embodiments of the present disclosure may be implemented to retrieve the recommendation information based on the attribute information of the target object and the content information of the video data, and further use the hotspot information as the recommendation information, so as to improve the diversity of the recommendation information and the effectiveness of the recommendation.

According to the embodiments of the present disclosure, the determined target key information may contain a target entity word indicating the target entity in the video data, so as to improve a recall rate of retrieving the first multimedia information based on the target key information.

According to the embodiments of the present disclosure, after the first bullet comment is generated, a simultaneous display of the first bullet comment and the target entity may be ensured by setting a time period information of displaying the first bullet comment, so as to improve a recommendation effect of the recommendation information linked in the first bullet comment and improve the click rate of the recommendation information. The target entity is an entity indicated by the entity word matched with the first bullet comment in the video data. When the first key information is extracted, in addition to extracting the entity feature, the embodiment may be further implemented to use the time period information of the target entity appearing in the video data as a tag indicating the entity feature of the target entity. In this way, in addition to the target entity word indicating the target entity in the video data, the target key information may further contain the time period information of the target entity appearing in the video data.

Exemplarily, the time period information of the target entity appearing in the video data may be used as a time period information of displaying the first bullet comment for the target entity word. The time period information may include a start time and a display duration.

Exemplarity, in a case that the first bullet comment generated includes a large number of bullet comments for the target entity word, the bullet comment, in the first bullet comment, for the target entity word may be used as a candidate bullet comment. A number of bullet comment allowed to be displayed may be determined according to a duration of the target entity appearing in the video data, and a bullet comment to be displayed may be selected from the candidate bullet comment. For example, the display duration of each bullet comment may be preset, and the number of bullet comments allowed to be displayed may be determined according to a size relationship between the display duration and the duration of the target entity appearing in the video data. For example, if the duration of the target entity appearing in the video data is 6s and the display duration of each bullet comment is 2s, it may be determined that the number of bullet comment allowed to be displayed is 6/2=3. When the bullet comment to be displayed is selected from the candidate bullet comment, for example, the candidate bullet comment with a high matching degree with the target entity may be selected as the target bullet comment displayed simultaneously with the target entity. Thus, when determining the time period information of the target bullet comment, a start time in the time period information of the target entity appearing in the video data may be used as a start time of displaying the target bullet comment. A smaller value of the duration of the target entity appearing in the video data and a predetermined duration may be used as the duration of displaying the target bullet comment. By setting the predetermined duration, it is possible to avoid a poor experience brought to the target object by a long-time display of the target bullet comment in a case that the user is not interested in the target bullet comment.

It may be understood that in a case of a plurality of target bullet comments, the start time of displaying the target bullet comment here is a start time of displaying a first one of the plurality of target bullet comments. For example, if the predetermined duration is 2s, the duration of the target entity appearing in the video data is 6s, three target bullet comments are to be displayed, and the start time of the target entity appearing in the video data is t, then a start time of displaying a first one of the three target bullet comments is t and the duration is 2s. A start time of displaying a second one of the three target bullet comments is t+2s and the duration is 2s. A start time of displaying a third one of the three target bullet comments is t+4s and the duration is 2s.

According to the embodiments of the present disclosure, in a case that the method of generating the bullet comment is implemented to generate not only the first bullet comment but also the second bullet comment described above, a display proportion of the first bullet comment and the second bullet comment may be determined according to a preference degree of the target object, and the target bullet comment finally to be displayed may be determined according to the display proportion. The attribute information of the target object described above may contain a preference degree of the target object for a hotspot information. The preference degree may be represented by a proportion of a number of hotspot information browsed by the target object to a number of all information browsed by the target object. In this embodiment, the preference degree may be used as a ratio of a number of second bullet comment to be displayed to a total number of target bullet comment to be displayed, and the target bullet comment may be selected from the first bullet comment and the second bullet comment.

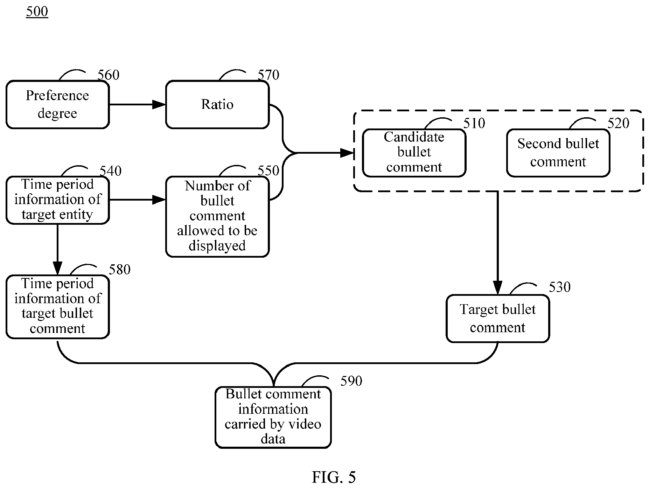

According to the embodiments of the present disclosure, in a case that the method of generating the bullet comment is implemented to generate not only the first bullet comment but also the second bullet comment described above, and the first bullet comment needs to be displayed simultaneously with the entity indicated by the target entity word targeted by the first bullet comment, a certain number of second bullet comment may be displayed according to the preference degree while the first bullet comment for the target entity word is displayed, so as to improve the diversity and the click rate of the information to which the bullet comment is linked. The method of generating the bullet comment in this case will be described below with reference to FIG. 5.

FIG. 5 shows a schematic principle diagram of a method of generating a bullet comment according to another embodiment of the present disclosure.

As shown in FIG. 5, subsequent to generating a first bullet comment and a second bullet comment 520, the method of generating the bullet comment in this embodiment 500 may further include selecting a candidate bullet comment 510 for the target entity word from the first bullet comment. After the candidate bullet comment 510 is selected, the candidate bullet comment 510 and the second bullet comment 520 may together constitute a bullet comment pool for selecting a target bullet comment 530.

According to the embodiments of the present disclosure, when there are a large number of second bullet comments 520 and candidate bullet comments 510 in the bullet comment pool, the bullet comments in the bullet comment pool may not be displayed completely within the time period of the target entity appearing in the video data. In this embodiment, a bullet comment allowed to be displayed may be selected from the bullet comment pool as the target bullet comment 530. When selecting the target bullet comment 530, this embodiment may be implemented to firstly determine a number 550 of bullet comment allowed to be displayed based on a time period information 540 of the target entity. Then, a ratio 570 of a number of candidate bullet comment to be displayed and a number of second bullet comment to be displayed may be determined according to a preference degree 560. After the ratio 570 is determined, the target bullet comment 530 may be selected from the bullet comment pool according to the ratio 570 and the number 550 of bullet comment allowed to be displayed. A proportion of the second bullet comment in the selected target bullet comment 530 may be equal to the preference degree 560.

After the target bullet comment 530 is obtained, a time period information 580 of displaying the target bullet comment may be determined according to the time period information 540 of the target entity. The time period information 580 of displaying the target bullet comment may be used as a tag of the target bullet comment 530, and then a bullet comment information 590 carried by the video data may be obtained. The bullet comment information 590 carried by the video data may be compressed together with the video data so as to obtain a data packet, which may be fed back to the terminal device as a feedback information when the terminal device requests to acquire the video data.

Exemplarity, after the bullet comment information 590 carried by the video data is obtained, for example, the bullet comment information 590 carried by the video data may be stored in a shared account book of a blockchain. When it is required to recommend information to the target object, the bullet comment information 590 carried by the video data may be extracted from the shared account book of the blockchain and provided to the terminal device, so that the terminal device may display the bullet comment information while playing the video data.

According to the embodiments of the present disclosure, after the target bullet comment is obtained, the start time in the time period information of the target entity appearing in the video data may be used as the start time of displaying the target bullet comment. A smaller value of the duration of the target entity appearing in the video data and the predetermined duration may be used as the duration of displaying the target bullet comment.

It may be understood that the method of selecting the bullet comment based on the preference degree and determining the time period information of the target bullet comment in this embodiment is similar to the method described above, which will not be repeated here.

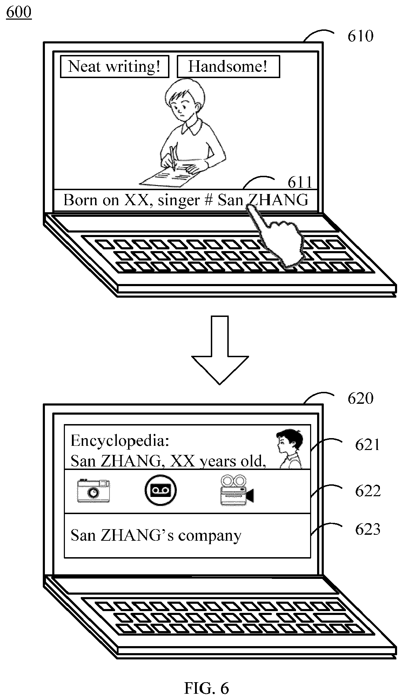

FIG. 6 shows a schematic diagram of a recommendation information responding to an interactive operation according to some embodiments of the present disclosure.

According to the embodiments of the present disclosure, when the first bullet comment is generated, in addition to recommending the first multimedia information to the target object through the first bullet comment, the multimedia information associated with the target entity word in the target key information, for example, may be mined through a knowledge graph, and the associated multimedia information may be recommended to the target object, so as to further recommend richer information to the target object.

Exemplarily, the target key information described above may contain a plurality of target entity words respectively indicating a plurality of target entities in the video data, and at least one first bullet comment is generated for each target entity word of the plurality of target entity words. The method of generating the bullet comment in this embodiment may further include an operation of determining a second multimedia information associated with the target entity word based on a predetermined knowledge graph. After the second multimedia information is obtained, the recommendation information may be generated based on the second multimedia information and a first multimedia information matched with the target entity word.

Exemplarity, a title of the second multimedia information and a title of the first multimedia information matched with each target entity word may be arranged to form a recommendation page as the recommendation information. An arrangement order may be set according to a matching degree between the multimedia information and the target entity word. Alternatively, the first multimedia information matched with each target entity word may be ranked first, and the second multimedia information may be randomly ranked after the first. In this way, since the first bullet comment includes a link to the recommendation information for the target object, after the first bullet comment is displayed on the terminal device, the display page may jump to the recommendation page in response to a click operation on the first bullet comment.

Exemplarily, in an embodiment 600 shown in FIG. 6, if the entity appearing in the video data includes the singer "San ZHANG", when the video is played to a picture 610 of "San ZHANG", the terminal device may display a bullet comment 611 "born on XX, singer#San ZHANG" for "San ZHANG" in the picture 610. In response to a click operation on the bullet comment 611, the display page of the terminal device may be switched to a page 620, for example. On the page 620, in addition to an encyclopedia information 621 of the first multimedia information "San ZHANG" matched with "San ZHANG", a work information 622 of "San ZHANG" associated with the encyclopedia information 621 (which may include, for example, photo, music, video, etc.) and a dynamic information 623 of "San ZHANG's company" associated with "San ZHANG".

According to the embodiments of the present disclosure, when determining the second multimedia information based on the predetermined knowledge graph, a node indicating the target entity in the predetermined knowledge graph, for example, may be firstly located, then the node may be used as a start point to diffuse according to a connection relationship between the node and other nodes, and the multimedia information indicated by the node obtained after n diffusions may be used as the second multimedia information. The node in the predetermined knowledge graph may include a node indicating the entity and a node indicating the multimedia information. Specifically, the predetermined knowledge graph may be constructed using a method described below, and will not be described in detail here. A value of n may be set according to actual requirements. For example, n may be a natural number greater than or equal to 2, which is not limited in the present disclosure.

According to the embodiments of the present disclosure, when the recommendation information is generated, an image of the target entity, for example, may be randomly acquired from the predetermined information database, and an intelligent cropping and an intelligent color-picking may be performed on the image, so as to generate a header image and a background color of the display page formed by arranging the first multimedia information and the second multimedia information described above, so that a beauty of the recommendation information may be improved.

According to the embodiments of the present disclosure, after the first bullet comment and/or the second bullet comment are/is generated by the above method, the method of generating the bullet comment of the embodiment may further include setting a display mode of each bullet comment. For example, a display position and a display form of the bullet comment may be set to distinguish the generated bullet comment from a typed bullet comment when the generated bullet comment is displayed. For example, if the typed bullet comment is displayed in a top area of a video frame of the video data, the generated bullet comment may be displayed in a bottom area or a side area of the video frame of the video data. Alternatively, a larger display font may be set for the generated bullet comment. In an embodiment, a content as an identifier may be added to the bullet comment when the bullet comment is generated. The identifier may be a graphic information such as a pentagram, a triangle, an emoticon, etc.

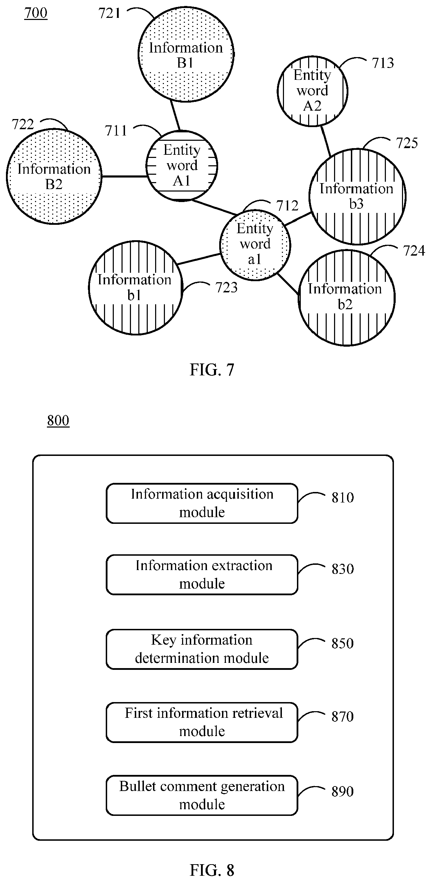

FIG. 7 shows a schematic structural diagram of a predetermined knowledge graph constructed according to some embodiments of the present disclosure.

The method of generating the bullet comment in this embodiment may further include an operation of constructing the predetermined knowledge graph. The operation of constructing the predetermined knowledge graph may include firstly retrieving an entity word associated with each target entity word from the predetermined word library, so as to obtain an associated entity word for the plurality of target entity words. After the associated entity word is obtained, a third multimedia information matched with the associated entity word may be retrieved from the predetermined media library described above. After the first multimedia information matched with the target entity word and the third multimedia information matched with the associated entity word are obtained, a plurality of nodes respectively indicating the associated entity word, the plurality of target entity words, the first multimedia information and the third multimedia information may be constructed, and a connecting edge between the plurality of nodes may be constructed based on an association between the plurality of target entity words and the associated entity word, a matching relationship between the plurality of target entity words and the first multimedia information, and a matching relationship between the associated entity word and the third multimedia information, so as to obtain the predetermined knowledge graph.

For example, as shown in FIG. 7, a knowledge graph 700 constructed in the embodiment includes at least a node 711 indicating a target entity word A1, a node 712 indicating an entity word a1 associated with the target entity word A1, a node indicating the first multimedia information matched with the target entity word A1 (including a node 721 indicating an information B1 and a node 722 indicating an information B2), and a node indicating the third multimedia information matched with the entity word a1 (including a node 723 indicating an information b1, a node 724 indicating an information b2, and a node 725 indicating an information b3). When determining the second multimedia information based on the predetermined knowledge graph, the node 711 may be located firstly. Then, by using the node 711 as a start point to jump one step outward according to an edge connecting the node 711, the node 721, the node 722 and the node 712 may be obtained, so that a first diffusion is achieved. Then, by using the node 721, the node 722 and the node 712 as the start point to jump one step outward, the node 723, the node 724 and the node 725 may be obtained, so that a second diffusion is achieved. And so on, n diffusions may be achieved. The multimedia information in the information indicated by all the nodes obtained by the diffusions may be used as the second multimedia information. In this embodiment, the second multimedia information includes at least the information b1, the information b2 and the information b3.

According to the embodiments of the present disclosure, when constructing the predetermined knowledge graph, for example, a variety of different types of information in the predetermined information database, such as graphics and text, Q&A, video, dynamics, encyclopedia, music, posts, library, live streaming and hot list, may be integrated into the predetermined knowledge graph according to a correlation with the first multimedia information and the third multimedia information, so as to enrich the second multimedia information obtained based on the knowledge graph.

It may be understood that the knowledge graph 700 in FIG. 7 may further include other entity words, multimedia information matched with the other entity words, and other multimedia information associated with the multimedia information. For example, the knowledge graph 700 in FIG. 7 may further include at least a node 713 indicating an entity word A2, and the information b3 may match the entity word A2.

FIG. 8 shows a structural block diagram of an apparatus of generating a bullet comment according to some embodiments of the present disclosure.

As shown in FIG. 8, an apparatus 800 of generating a bullet comment of this embodiment may include an information acquisition module 810, an information extraction module 830, a key information determination module 850, a first information retrieval module 870, and a bullet comment generation module 890.

The information acquisition module 810 is used to acquire a content information of video data and an attribute information of a target object. In an embodiment, the information acquisition module 810 is used to perform the operation S210 described above, which will not be repeated here.

The information extraction module 830 is used to extract a first key information of the content information, and extract a second key information of the attribute information. In an embodiment, the information extraction module 830 is used to perform the operation S230 described above, which will not be repeated here.

The key information determination module 850 is used to determine a target key information for the target object, including determining an information, which is matched with the second key information, in the first key information as the target key information. In an embodiment, the key information determination module 850 may be used to perform the operation S250 described above, which will not be repeated here.

The first information retrieval module 870 is used to retrieve a first multimedia information matched with the target key information from a predetermined media library. In an embodiment, the first information retrieval module 870 is used to perform the operation S270 described above, which will not be repeated here.

The bullet comment generation module 890 is used to generate a first bullet comment for the target key information based on the first multimedia information, so that the first bullet comment may be displayed while the video data is played. In an embodiment, the bullet comment generation module 890 may be used to perform the operation S290 described above, which will not be repeated here.

According to the embodiments of the present disclosure, the key information determination module may be further used to firstly determine a domain associated with the matching information in a predetermined domain as a target domain. Then, a word in the predetermined word library that belongs to the target domain and that is associated with the matched information may be determined as the target key information.

According to the embodiments of the present disclosure, the apparatus 800 of generating the bullet comment may further include a second information retrieval module used to retrieve a hotspot information from the predetermined information database. The bullet comment generation module described above may be further used to generate a second bullet comment for the hotspot information, so that the second bullet comment may be displayed while the video data is played. The second bullet comment may include a link to the hotspot information.

According to the embodiments of the present disclosure, the target key information may contain a target entity word indicating the target entity in the video data, a time period information of the target entity appearing in the video data. The apparatus 800 of generating the bullet comment may further include a candidate bullet comment determination module, a number determination module, a target bullet comment determination module, and a time information determination module. The candidate bullet comment determination module is used to determine a bullet comment, in the first bullet comment, for the target entity word as a candidate bullet comment. The number determination module is used to determine a number of bullet comment allowed to be displayed based on the time period information of the target entity appearing in the video data. The target bullet comment determination module is used to determine a target bullet comment based on the number of bullet comment allowed to be displayed and the candidate bullet comment. The time information determination module is used to determine the time period information of displaying the target bullet comment based on the time period information of the target entity appearing in the video data.

According to the embodiments of the present disclosure, the attribute information may contain a preference degree of the target object for a hotspot information. A plurality of candidate bullet comments may be determined, and a plurality of second bullet comments may be generated. The target bullet comment determination module includes a ratio determination sub-module and a bullet comment determination sub-module. The ratio determination sub-module is used to determine a ratio of a number of candidate bullet comment to be displayed to a number of second bullet comment to be displayed based on the preference degree. The bullet comment determination sub-module is used to determine the target bullet comment from the candidate bullet comments and the second bullet comments based on the ratio and the number of bullet comment allowed to be displayed.

According to the embodiments of the present disclosure, the time period information of the target entity appearing in the video data may include a duration of the target entity appearing in the video data and a start time of the target entity appearing in the video data. The time information determination module includes a start time determination sub-module and a duration determination sub-module. The start time determination sub-module is used to determine the start time of the target entity appearing in the video data as a start time of displaying the target bullet comment. The duration determination sub-module is used to determine a smaller value of the duration of the target entity appearing in the video data and a predetermined duration as a duration of displaying the target bullet comment.

According to the embodiments of the present disclosure, the target key information may contain a plurality of target entity words respectively indicating a plurality of target entities in the video data, and at least one first bullet comment is generated for each target entity word of the plurality of target entity words. The apparatus 800 of generating the bullet comment may further include a multimedia information determination module and a recommendation information generation module. The multimedia information determination module is used to determine, for each target entity word, a second multimedia information associated with the target entity word based on a predetermined knowledge graph. The recommendation information generation module is used to generate a recommendation information based on the second multimedia information and a first multimedia information matched with the target entity word.

According to the embodiments of the present disclosure, the apparatus 800 of generating the bullet comment may further include a graph construction module used to construct the predetermined knowledge graph. The graph construction module includes an associated word retrieval sub-module, an information retrieval sub-module, a node construction sub-module, and an edge construction sub-module. The associated word retrieval sub-module is used to retrieve an entity word associated with the target entity word from the predetermined word library, so as to obtain an associated entity word for the plurality of target entity words. The information retrieval sub-module is used to retrieve a third multimedia information matched with the associated entity word from the predetermined media library. The node construction sub-module is used to construct a plurality of nodes respectively indicating the associated entity word, the plurality of target entity words, the first multimedia information and the third multimedia information. The edge construction sub-module is used to construct a connecting edge between the plurality of nodes based on an association between the plurality of target entity words and the associated entity word, a matching relationship between the plurality of target entity words and the first multimedia information, and a matching relationship between the associated entity word and the third multimedia information, so as to obtain the predetermined knowledge graph.

In the technical solution of the present disclosure, the collection, storage, use, processing, transmission, provision, and disclosure of the user's personal information involved are in compliance with relevant laws and regulations, and do not violate public order and good customs.

According to the embodiments of the present disclosure, the present disclosure further provides an electronic device, a readable storage medium, and a computer program product.

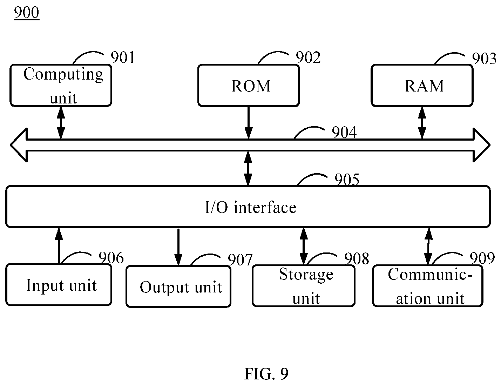

FIG. 9 shows a schematic block diagram of an exemplary electronic device 900 for implementing the embodiments of the present disclosure. The electronic device is intended to represent various forms of digital computers, such as a laptop computer, a desktop computer, a workstation, a personal digital assistant, a server, a blade server, a mainframe computer, and other suitable computers. The electronic device may further represent various forms of mobile devices, such as a personal digital assistant, a cellular phone, a smart phone, a wearable device, and other similar computing devices. The components as illustrated herein, and connections, relationships, and functions thereof are merely examples, and are not intended to limit the implementation of the present disclosure described and/or required herein.

As shown in FIG. 9, the electronic device 900 includes a computing unit 901, which may perform various appropriate actions and processing based on a computer program stored in a read-only memory (ROM) 902 or a computer program loaded from a storage unit 908 into a random access memory (RAM) 903. Various programs and data required for the operation of the electronic device 900 may be stored in the RAM 903. The computing unit 901, the ROM 902 and the RAM 903 are connected to each other through a bus 904. An input/output (I/O) interface 905 is also connected to the bus 904.

Various components in the electronic device 900, including an input unit 906 such as a keyboard, a mouse, etc., an output unit 907 such as various types of displays, speakers, etc., a storage unit 908 such as a magnetic disk, an optical disk, etc., and a communication unit 909 such as a network card, a modem, a wireless communication transceiver, etc., are connected to the I/O interface 905. The communication unit 909 allows the electronic device 900 to exchange information/data with other devices through a computer network such as the Internet and/or various telecommunication networks.

The computing unit 901 may be various general-purpose and/or special-purpose processing components with processing and computing capabilities. Some examples of the computing unit 901 include but are not limited to a central processing unit (CPU), a graphics processing unit (GPU), various dedicated artificial intelligence (AI) computing chips, various computing units running machine learning model algorithms, a digital signal processor (DSP), and any appropriate processor, controller, microcontroller, and so on. The computing unit 901 may perform the various methods and processes described above, such as the method of processing the audio or video data. For example, in some embodiments, the method of processing the audio or video data may be implemented as a computer software program that is tangibly contained on a machine-readable medium, such as the storage unit 908. In some embodiments, part or all of a computer program may be loaded and/or installed on electronic device 900 via the ROM 902 and/or the communication unit 909. When the computer program is loaded into the RAM 903 and executed by the computing unit 901, one or more steps of the method of processing the audio or video data described above may be performed. Alternatively, in other embodiments, the computing unit 901 may be configured to perform the method of processing the audio or video data in any other appropriate way (for example, by means of firmware).

Various embodiments of the systems and technologies described herein may be implemented in a digital electronic circuit system, an integrated circuit system, a field programmable gate array (FPGA), an application specific integrated circuit (ASIC), an application specific standard product (ASSP), a system on chip (SOC), a complex programmable logic device (CPLD), a computer hardware, firmware, software, and/or combinations thereof. These various embodiments may be implemented by one or more computer programs executable and/or interpretable on a programmable system including at least one programmable processor. The programmable processor may be a dedicated or general-purpose programmable processor, which may receive data and instructions from the storage system, the at least one input device and the at least one output device, and may transmit the data and instructions to the storage system, the at least one input device, and the at least one output device.

Program codes for implementing the method of the present disclosure may be written in any combination of one or more programming languages. These program codes may be provided to a processor or a controller of a general-purpose computer, a special-purpose computer, or other programmable data processing devices, so that when the program codes are executed by the processor or the controller, the functions/operations specified in the flowchart and/or block diagram may be implemented. The program codes may be executed completely on the machine, partly on the machine, partly on the machine and partly on the remote machine as an independent software package, or completely on the remote machine or the server.

In the context of the present disclosure, the machine readable medium may be a tangible medium that may contain or store programs for use by or in combination with an instruction execution system, device or apparatus. The machine readable medium may be a machine-readable signal medium or a machine-readable storage medium. The machine readable medium may include, but not be limited to, electronic, magnetic, optical, electromagnetic, infrared or semiconductor systems, devices or apparatuses, or any suitable combination of the above. More specific examples of the machine readable storage medium may include electrical connections based on one or more wires, portable computer disks, hard disks, random access memory (RAM), read-only memory (ROM), erasable programmable read-only memory (EPROM or flash memory), optical fiber, convenient compact disk read-only memory (CD-ROM), optical storage device, magnetic storage device, or any suitable combination of the above.

In order to provide interaction with users, the systems and techniques described here may be implemented on a computer including a display device (for example, a CRT (cathode ray tube) or LCD (liquid crystal display) monitor) for displaying information to the user), and a keyboard and a pointing device (for example, a mouse or a trackball) through which the user may provide the input to the computer. Other types of devices may also be used to provide interaction with users. For example, a feedback provided to the user may be any form of sensory feedback (for example, visual feedback, auditory feedback, or tactile feedback), and the input from the user may be received in any form (including acoustic input, voice input or tactile input).

The systems and technologies described herein may be implemented in a computing system including back-end components (for example, a data server), or a computing system including middleware components (for example, an application server), or a computing system including front-end components (for example, a user computer having a graphical user interface or web browser through which the user may interact with the implementation of the system and technology described herein), or a computing system including any combination of such back-end components, middleware components or front-end components. The components of the system may be connected to each other by digital data communication (for example, a communication network) in any form or through any medium. Examples of the communication network include a local area network (LAN), a wide area network (WAN), and Internet.

The computer system may include a client and a server. The client and the server are generally far away from each other and usually interact through a communication network. The relationship between the client and the server is generated through computer programs running on the corresponding computers and having a client-server relationship with each other.

It should be understood that steps of the processes illustrated above may be reordered, added or deleted in various manners. For example, the steps described in the present disclosure may be performed in parallel, sequentially, or in a different order, as long as a desired result of the technical solution of the present disclosure may be achieved. This is not limited in the present disclosure.

The above-mentioned specific embodiments do not constitute a limitation on the scope of protection of the present disclosure. Those skilled in the art should understand that various modifications, combinations, sub-combinations and substitutions may be made according to design requirements and other factors. Any modifications, equivalent replacements and improvements made within the spirit and principles of the present disclosure shall be contained in the scope of protection of the present disclosure.

## Claims

1. A method (200) of generating a bullet comment, comprising:
acquiring (S210) a content information (410) of video data and an attribute information (420) of a target object;
extracting (S230) a first key information (310) of the content information (410), and extracting a second key information (320) of the attribute information (420);
determining (S250) a target key information (350, 430) for the target object, wherein the determining (S250) comprising determining an information (311), which is matched with the second key information (320), in the first key information (310) as the target key information (350, 430);
retrieving (S270) a first multimedia information (450) matched with the target key information (350, 430) from a predetermined media library (440); and
generating (S290) a first bullet comment (460) for the target key information (350, 430) based on the first multimedia information (450), so as to display the first bullet comment (460) while playing the video data, wherein the first bullet comment (460) comprises a link to a recommendation information for the target object, and the recommendation information includes the first multimedia information (450).

2. The method of claim 1, wherein the determining a target key information (350, 430) for the target object comprises:
determining a domain in a predetermined domain (330) as a target domain (331), wherein the domain is associated with the information (311) matched with the second key information (320); and
determining a word (341) in a predetermined word library (340) as the target key information (350, 430), wherein the word belongs to the target domain (331) and is associated with the information (311) matched with the second key information (320).

3. The method of any preceding claim, further comprising:
retrieving a hotspot information (480) from a predetermined information database (470); and
generating a second bullet comment (490, 520) for the hotspot information (480), so as to display the second bullet comment (490, 520) while playing the video data, wherein the second bullet comment (490, 520) comprises a link to the hotspot information (480).

4. The method of any preceding claim, wherein the target key information (350, 430) contains a target entity word indicating a target entity in the video data and a time period information (540) of the target entity appearing in the video data; the method further comprises:
determining a bullet comment, in the first bullet comment (460), for the target entity word as a candidate bullet comment (510);
determining, based on the time period information (540) of the target entity appearing in the video data, a number (550) of bullet comment allowed to be displayed;
determining a target bullet comment (530) based on the number (550) of bullet comment allowed to be displayed and the candidate bullet comment (510); and
determining, based on the time period information (540) of the target entity appearing in the video data, a time period information (580) of displaying the target bullet comment (530).

5. The method of claim 4, wherein the attribute information (420) contains a preference degree (560) of the target object for the hotspot information (480); a plurality of candidate bullet comments (510) are determined, and a plurality of second bullet comments (490, 520) are generated; and wherein the determining a target bullet comment (530) comprises:
determining, based on the preference degree (560), a ratio (570) of a number of candidate bullet comment (510) to be displayed to a number of second bullet comment (490, 520) to be displayed; and
determining the target bullet comment (530) from the candidate bullet comments (510) and the second bullet comments (490, 520) based on the ratio (570) and the number (550) of bullet comment allowed to be displayed.

6. The method of claim 4, wherein the time period information of the target entity appearing in the video data contains a duration of the target entity appearing in the video data and a start time of the target entity appearing in the video data; and wherein the determining a time period information (580) of displaying the target bullet comment (530) comprises:
determining the start time of the target entity appearing in the video data as a start time of displaying the target bullet comment (530); and
determining a smaller value of the duration of the target entity appearing in the video data and a predetermined duration as a duration of displaying the target bullet comment (530).

7. The method of any preceding claim, wherein the target key information (350, 430) contains a plurality of target entity words respectively indicating a plurality of target entities in the video data, and at least one first bullet comment (460) is generated for each target entity word of the plurality of target entity words; and the method further comprises: for the each target entity word,
determining a second multimedia information associated with the each target entity word based on a predetermined knowledge graph; and
generating the recommendation information based on the second multimedia information and a first multimedia information (450) matched with the each target entity word.

8. The method of claim 7, further comprising constructing the predetermined knowledge graph, wherein the constructing the predetermined knowledge graph comprises:
retrieving an entity word associated with the each target entity word from a predetermined word library (340), so as to obtain an associated entity word for the plurality of target entity words;
retrieving a third multimedia information matched with the associated entity word from the predetermined media library (440);
constructing a plurality of nodes respectively indicating the associated entity word, the plurality of target entity words, the first multimedia information (450) and the third multimedia information; and
constructing a connecting edge between the plurality of nodes based on an association between the plurality of target entity words and the associated entity word, a matching relationship between the plurality of target entity words and the first multimedia information (450) and a matching relationship between the associated entity word and the third multimedia information, so as to obtain the predetermined knowledge graph.

9. An apparatus (800) of generating a bullet comment, comprising:
an information acquisition module (810) configured to acquire a content information of video data and an attribute information of a target object;
an information extraction module (830) configured to extract a first key information of the content information and extract a second key information of the attribute information;
a key information determination module (850) configured to determine a target key information for the target object, comprising determining an information, which is matched with the second key information, in the first key information as the target key information;
a first information retrieval module (870) configured to retrieve a first multimedia information matched with the target key information from a predetermined media library; and
a bullet comment generation module (890) configured to generate a first bullet comment for the target key information based on the first multimedia information, so as to display the first bullet comment while playing the video data, wherein the first bullet comment comprises a link to a recommendation information for the target object, and the recommendation information includes the first multimedia information.

10. The apparatus of claim 9, further comprising:
a second information retrieval module configured to retrieve a hotspot information from a predetermined information database;
wherein the bullet comment generation module (890) is further configured to generate a second bullet comment for the hotspot information, so as to display the second bullet comment while playing the video data, and the second bullet comment comprises a link to the hotspot information,
wherein the key information determination module (850) is further configured to:
determine a domain in a predetermined domain as a target domain, wherein the domain is associated with the information matched with the second key information; and
determine a word in a predetermined word library as the target key information, wherein the word belongs to the target domain and is associated with the information matched with the second key information.

11. The apparatus of any preceding claim, wherein the target key information contains a target entity word indicating a target entity in the video data and a time period information of the target entity appearing in the video data; the apparatus further comprises:
a candidate bullet comment determination module configured to determine a bullet comment, in the first bullet comment, for the target entity word as a candidate bullet comment;
a number determination module configured to determine, based on the time period information of the target entity appearing in the video data, a number of bullet comment allowed to be displayed;
a target bullet comment determination module configured to determine a target bullet comment based on the number of bullet comment allowed to be displayed and the candidate bullet comment; and
a time information determination module configured to determine, based on the time period information of the target entity appearing in the video data, a time period information of displaying the target bullet comment,
wherein the attribute information contains a preference degree of the target object for the hotspot information; a plurality of candidate bullet comments are determined, and a plurality of second bullet comments are generated; and wherein the target bullet comment determination module comprises:
a ratio determination sub-module configured to determine, based on the preference degree, a ratio of a number of candidate bullet comment to be displayed to a number of second bullet comment to be displayed; and
a bullet comment determination sub-module configured to determine the target bullet comment from the candidate bullet comments and the second bullet comments based on the ratio and the number of bullet comment allowed to be displayed,
the time period information of the target entity appearing in the video data contains a duration of the target entity appearing in the video data and a start time of the target entity appearing in the video data; and wherein the time information determination module comprises:
a start time determination sub-module configured to determine the start time of the target entity appearing in the video data as a start time of displaying the target bullet comment; and
a duration determination sub-module configured to determine a smaller value of the duration of the target entity appearing in the video data and a predetermined duration as a duration of displaying the target bullet comment.

12. The apparatus of any preceding claim, wherein the target key information contains a plurality of target entity words respectively indicating a plurality of target entities in the video data, and at least one first bullet comment is generated for each target entity word of the plurality of target entity words; and the apparatus further comprises:
a multimedia information determination module configured to determine, for the each target entity word, a second multimedia information associated with the each target entity word based on a predetermined knowledge graph;
a recommendation information generation module configured to generate the recommendation information based on the second multimedia information and a first multimedia information matched with the each target entity word; and
a graph construction module configured to construct the predetermined knowledge graph, wherein the graph construction module comprises:
an associated word retrieval sub-module configured to retrieve an entity word associated with the each target entity word from a predetermined word library, so as to obtain an associated entity word for the plurality of target entity words;
an information retrieval sub-module configured to retrieve a third multimedia information matched with the associated entity word from the predetermined media library;
a node construction sub-module configured to construct a plurality of nodes respectively indicating the associated entity word, the plurality of target entity words, the first multimedia information and the third multimedia information; and
an edge construction sub-module configured to construct a connecting edge between the plurality of nodes based on an association between the plurality of target entity words and the associated entity word, a matching relationship between the plurality of target entity words and the first multimedia information and a matching relationship between the associated entity word and the third multimedia information, so as to obtain the predetermined knowledge graph.

13. An electronic device (900), comprising:
at least one processor; and
a memory (902) communicatively connected to the at least one processor, wherein the memory (902) stores instructions executable by the at least one processor, and the instructions, when executed by the at least one processor, cause the at least one processor to implement the method of any preceding claim.

14. A non-transitory computer-readable storage medium having computer instructions stored thereon, wherein the computer instructions allow a computer to implement the method of any preceding claim.

15. A computer program product containing a computer program/instruction, wherein the computer program/instruction, when executed by a processor, causes the processor to implement operations of the method of any preceding claim.
